# EUROPÄISCHE PATENTANMELDUNG

(11) **EP 4 663 975 A1**
(43) Veröffentlichungstag der Anmeldung: **17.12.2025**
(21) Anmeldenummer: 25175207.7
(22) Anmeldetag: 08.05.2025
(51) Int. Cl.: F16F 13/14

(54) **LAGERBUCHSE**

(30) Priorität: 14.06.2024 CN 202410775304
(71) Anmelder: Vibracoustic (Shanghai) Sales & Trading Co. Ltd., Shanghai Shanghai (CN)
(72) Erfinder: Wang, Qian, Wuxi City (CN); Shang, Zhenfeng, Wuxi City (CN)
(74) Vertreter: Patentanwälte Olbricht Buchhold Keulertz

(57) **Zusammenfassung**

Bei einer Lagerbuchse (10) zur hydraulischen Dämpfung in axialer Richtung (R1) und radialer Richtung (R2, R3), wobei die Lagerbuchse (10) einen Kern (20), einen Elastomerkörper (40), eine Außenhülse (50), eine Käfigstruktur (30), sowie vier Kanalhalbschalen (60, 61, 62, 64), ein erstes Fluidkammerpaar mit zwei Fluidkammern (80, 82) für die Dämpfung in radialer Richtung (R2, R3) und ein zweites Fluidkammerpaar mit zwei Fluidkammern (81, 83) für die Dämpfung in axialer Richtung (R1) aufweist, wird vorgeschlagen, dass die Kanalhalbschalen (60, 61, 62, 63) im montierten Zustand insgesamt wenigstens zwei Dämpfungskanäle (70, 71) bilden, die die Fluidkammern (80, 81, 82, 83) jeweils paarweise derart miteinander verbinden, dass die Fluidkammern (80, 82) des ersten Fluidkammerpaares durch den ersten Dämpfungskanal (70) miteinander verbunden sind und dass die Fluidkammern (81, 83) des zweiten Fluidkammerpaares durch den zweiten Dämpfungskanal (71) miteinander verbunden sind.

## Beschreibung

### Technisches Gebiet

Die Erfindung betrifft eine Lagerbuchse.

### Hauptsächlicher Stand der Technik

Lagerbuchsen, die als sogenannte Hydrolager ausgebildet sind, sind grundsätzlich bekannt. Dabei sind zumeist zwei Fluidkammern vorhanden, die mit hydraulischer Flüssigkeit gefüllt sind und die mit einem Dämpfungskanal verbunden sind, so dass zwischen den Fluidkammern ein Flüssigkeitsaustausch stattfinden kann. In der Folge können diese Fluidkammern eine Dämpfung einer entsprechenden Bewegungsrichtung bewirken.

Bei den im Stand der Technik bekannten hydraulischen Lagerbuchsen ist dabei zumeist entweder eine Dämpfung in axialer Richtung oder in radialer Richtung realisiert. Bei Lagerbuchsen, die eine Dämpfung sowohl in axialer als auch in radialer Richtung realisieren, ist die Dämpfung in einer der beiden Richtungen zumeist nicht unabhängig von der Dämpfung in der jeweils anderen Richtung. Eine solche Lagerbuchse schlägt beispielsweise die GB 2 360 345 A vor. Üblicherweise haben solche Lagerbuchsen eine innere Hülse, oft auch als Lagerkern bezeichnet, eine äußere Hülse, einen zwischen den Hülsen angeordneten Elastomerkörper und eine Käfigstruktur, die ebenfalls zwischen innerer und äußerer Hülse angeordnet ist. Elastomerkörper und Käfigstruktur bilden dabei zusammen die Fluidkammern. Die Fluidkammern sind mit einer hydraulischen Flüssigkeit gefüllt.

### Inhalt der Erfindung

Es stellt sich mithin die Aufgabe, eine verbesserte Lagerbuchse bereitzustellen, die sowohl eine Dämpfung in axialer als auch eine Dämpfung in radialer Richtung ermöglicht und bei der die Dämpfung in axialer Richtung unabhängig von der Dämpfung in radialer Richtung ist. Die Lagerbuchse sollte dabei möglichst einfach und kostengünstig herstellbar sein.

Bei einer Lagerbuchse zur hydraulischen Dämpfung in axialer Richtung und radialer Richtung, wobei die Lagerbuchse einen Kern, einen Elastomerkörper, eine Außenhülse, eine Käfigstruktur, sowie vier Kanalhalbschalen, ein erstes Fluidkammerpaar mit zwei Fluidkammern für die Dämpfung in radialer Richtung und ein zweites Fluidkammerpaar mit zwei Fluidkammern für die Dämpfung in axialer Richtung aufweist, wird vorgeschlagen, dass die Kanalhalbschalen im montierten Zustand insgesamt wenigstens zwei Dämpfungskanäle bilden, die die Fluidkammern jeweils paarweise derart miteinander verbinden, dass die Fluidkammern des ersten Fluidkammerpaares durch den ersten Dämpfungskanal miteinander verbunden sind und dass die Fluidkammern des zweiten Fluidkammerpaares durch den zweiten Dämpfungskanal miteinander verbunden sind.

Die Lagerbuchse hat eine im Wesentlichen zylindrische Form mit einer zentralen Achse, wobei die Außenhülse den Mantel des Zylinders bildet. Die axiale Richtung erstreckt sich parallel zu dieser zentralen Achse. Die radiale Richtung erstreckt sich radial zu dieser zentralen Achse. Der Kern der Lagerbuchse kann eine innere Hülse sein, die den zu lagernden Gegenstand aufnimmt. Der Elastomerkörper ist zwischen Kern und Außenhülse angeordnet. Bevorzugt ist der Elastomerkörper mindestens an den Kern anvulkanisiert. Außerdem ist der Elastomerkörper bevorzugt einstückig ausgebildet. Wenn der Elastomerkörper einstückig ausgebildet ist, kann das gesamte Lager mittels eines einzigen Vulkanisationswerkzeuges hergestellt werden. Es sind weder verschiedene Vulkanisationswerkzeuge notwendig, noch müssen mehrere vulkanisierte Komponenten zu einer Baugruppe montiert werden.

Die Käfigstruktur ist ebenfalls zwischen dem Kern und der Außenhülse angeordnet. Bevorzugt umschließt der Elastomerkörper die Käfigstruktur, wobei der Elastomerkörper zumindest bereichsweise auf der radial auswärts gerichteten Seiten des Käfigs Dichtungen, beispielsweise Dichtringe ausbildet. Die Käfigstruktur unterstützt zudem die Stabilität des Elastomerkörpers und ermöglicht durch seine Stützwirkung auf die Dichtringe eine fluiddichtende Montage mit der Außenhülse. Der Elastomerkörper umschließt sowohl den Kern als auch die Käfigstruktur, mit Ausnahme von für die Vulkanisation notwendigen Abstützstellen. Dabei formt er die Fluidkammern, die aber zur Außenhülse hin zunächst offen sind. Die Kanalhalbschalen verschließen die Fluidkammern dann zumindest bereichsweise von außen. Mit anderen Worten, die Fluidkammern werden weitestgehend vom Elastomerkörper und den Kanalhalbschalen begrenzt.

Die Kanalhalbschalen sind dabei als Zylindersegmente mit einer der Außenhülse zugewandten Außenseite und einer dem Kern zugewandten Innenseite ausgebildet. Die Dämpfungskanäle sind an der Außenseite der Kanalhalbschale ausgebildet. An den Stellen, an denen die Dämpfungskanäle mit den an der Innenseite liegenden Fluidkammern verbunden sind, führt ein Durchlass von der jeweiligen Fluidkammer durch die Kanalhalbschale hindurch zum jeweiligen Dämpfungskanal.

Besonders günstig ist es, wenn die Fluidkammern des zweiten Fluidkammerpaares einen Teilkreis von mindestens 180°, bevorzugt von mindestens 250°, besonders bevorzugt von mindestens 270° aber weniger als 360° um die Zentralachse A beschreiben. Die Fluidkammern des zweiten Fluidkammerpaares sind mithin U-förmig oder C-förmig. Die so geformten Fluidkammern haben zwei Schenkel, eine Basis, die die beiden Schenkel verbindet und eine der Basis gegenüberliegende Lücke zwischen den freien Enden der Schenkel. Die Fluidkammern sind dabei derart angeordnet, dass die Lücke der jeweils einen Fluidkammer axial fluchtend über der Basis der jeweils anderen Fluidkammer angeordnet ist. Die Schenkel der ersten Fluidkammer grenzen dabei in axialer Richtung an die Schenkel der zweiten Fluidkammer. Zwischen den Schenkeln der ersten Fluidkammer und den Schenkeln der zweiten Fluidkammer ist eine Trennmembran ausgebildet. Die Trennmembran ist Teil des Elastomerkörpers. Je kleiner die Schenkel ausfallen, desto größer wird die Basis der Fluidkammer. Theoretisch ist es auch möglich, dass der Fluidkammern des zweiten Fluidkammerpaares ausschließlich aus der Basis bestehen. In diesem Fall ist zwischen der ersten Fluidkammer und der zweiten Fluidkammer keine Trennmembran ausgebildet.

Weiterhin ist es günstig, dass die Fluidkammern des ersten Fluidkammerpaares einen Teilkreis von höchstens 90° und größer als 10°, bevorzugt höchstens 45° und größer 20°, besonders bevorzugt von 30° um die Zentralachse A beschreiben. Die Fluidkammern des ersten Fluidkammerpaares haben jeweils die Form eines Ringsegments. Jeweils eine der Fluidkammern des ersten Fluidkammerpaares und eine der Fluidkammern des zweiten Fluidkammerpaares formen dabei zusammen einen vollständigen Ring um die Zentralachse. Dabei ist die jeweilige Fluidkammer des ersten Fluidkammerpaares in der Lücke der jeweiligen Fluidkammer des zweiten Fluidkammerpaares angeordnet. In axialer Richtung schließt die Fluidkammer des ersten Fluidkammerpaares mithin an die Basis der zweiten Fluidkammer des zweiten Fluidkammerpaares an.

Man erkennt insofern, dass die Lagerbuchse in axialer Richtung eine Gesamthöhe aufweist, die sich jeweils aus der Höhe zweier Fluidkammern zusammensetzt. Im Bereich der Schenkel der Fluidkammern des zweiten Fluidkammerpaares setzt sich die Gesamthöhe aus der Höhe des Schenkels der ersten Fluidkammer des zweiten Fluidkammerpaares und der Höhe des Schenkels der zweiten Fluidkammer des zweiten Fluidkammerpaares zusammen. Im Bereich der Basis der Fluidkammern des zweiten Fluidkammerpaares setzt sich die Gesamthöhe aus der Höhe der Basis der jeweiligen Fluidkammer des zweiten Fluidkammerpaares und der Höhe der in axialer Richtung anschließenden Fluidkammer des ersten Fluidkammerpaares zusammen.

Besonders günstig ist es dabei, wenn die Lagerbuchse in axialer Richtung eine Gesamthöhe aufweist, wobei die Höhe der Fluidkammern des ersten Fluidkammerpaares jeweils mindestens 2/3 und höchsten 4/5 der Gesamthöhe beträgt. Hierdurch ist die nach außen in Richtung Außenhülse gerichtete Gesamtfläche der ersten Fluidkammerpaare ausreichend groß, um bei einer Radialen Belastung in Richtung der ersten Fluidkammerpaare eine ausreichend große Pumpfläche aufzuweisen. Eine solch große radiale Pumpfläche führt dazu, dass das Lager Schwingungen in Richtung der ersten Fluidkammerpaare ausreichend bedämpfen beziehungsweise tilgen kann. Die Fluidkammern des zweiten Fluidkammerpaares haben bei einer solchen Ausgestaltung im Bereich der Basis eine geringere Höhe als im Bereich der Schenkel. Mit anderen Worten, es kann günstig sein, dass die Fluidkammern des zweiten Fluidkammerpaares in axialer Richtung eine erste Höhe und eine zweite Höhe aufweisen, wobei die erste Höhe in einem Bereich der Lagerbuchse vorliegt, in dem die Gesamthöhe durch eine Fluidkammer des ersten Fluidkammerpaares und eine Fluidkammer des zweiten Fluidkammerpaares gebildet wird und wobei die zweite Höhe in einem Bereich der Lagerbuchse vorliegt, in dem die Gesamthöhe durch zwei Fluidkammern des zweiten Fluidkammerpaares gebildet wird. Die Gesamthöhe des Elastomerkörpers, der die Fluidkammer umschließt, ist auf diese Weise rotationssymmetrisch und in axialer Richtung konstant.

In jedem Fall ist es weiterhin von Vorteil, wenn die Käfigstruktur zwei Käfigsegmente aufweist, wobei jedes Käfigsegment ein Ringsegment und ein rechteckiges Rahmensegment aufweist. Das Ringsegment spannt eine gedachte Ebene auf, auf der die Zentralachse senkrecht steht. Dabei verläuft die Zentralachse durch den Mittelpunkt des Ringsegmentes. Das rechteckige Rahmensegment erstreckt sich vom Ringsegment aus in axialer Richtung. Das Rahmensegment hat dabei ein Paar erster Streben und ein Paar zweiter Streben. Die ersten Streben verlaufen dabei in Umfangsrichtung um die Zentralachse, wobei eine der ersten Streben durch einen Teil des Ringsegments gebildet wird. Die zweite der ersten Streben verläuft parallel zu der ersten Streben aber in axialer Richtung versetzt. Die zweiten Streben verbinden die beiden ersten Streben und erstrecken sich in axialer Richtung, wobei sie jeweils parallel zur Zentralachse verlaufen und mithin jeweils senkrecht zu den beiden Streben der ersten Streben verlaufen.

In jedem Fall sind die Käfigsegmente der Käfigstruktur unabhängig voneinander. Besonders bevorzugt gibt es auch keinen Steg oder ähnliches, der die Käfigsegmente miteinander verbindet. Durch ihre zylindrische Form hat die Lagerbuchse eine erste und eine zweite Stirnseite, die jeweils an den Enden der zentralen Achse ausgebildet sind. Das erste Käfigsegment, insbesondere das Ringsegment des ersten Käfigsegmentes ist dann bevorzugt im Bereich der ersten Stirnseite angeordnet und das zweite Käfigsegment, insbesondere das Ringsegment des zweiten Käfigsegments im Bereich der zweiten Stirnseite. Die Rahmensegmente erstrecken sich dann jeweils in axialer Richtung auf die jeweils andere Stirnseite zu.

Jedes Käfigsegment stützt dabei eine Fluidkammer des ersten Fluidkammerpaares und eine Fluidkammer des zweiten Fluidkammerpaares. Beide dieser Fluidkammerpaare stehen dabei in Verbindung mit dem Ringsegment. Die Fluidkammer des zweiten Fluidkammerpaares ist im Bereich des rechteckigen Rahmensegments ausgebildet; dabei werden alle Elastomersegmente, die sich senkrecht von der Zentrallängsachse A erstrecken und jeweils eine der ersten Fluidkammerpaare begrenzen, außenumfangseitig von jeweils einem rechteckigen Rahmensegment vollständig begrenzt und dort umlaufendgestützt.

Günstig ist es in jedem Fall auch wenn der Kern eine Versteifungsstruktur aufweist. Denkbar ist auch, dass die Käfigstruktur Versteifungsstrukturen aufweist. Sowohl der Kern als auch die Käfigstruktur sind aus einem Material, das zu einem geringeren Grad elastisch verformbar ist als der Elastomerkörper. Bevorzugt ist das Material im Verhältnis zum Elastomer vernachlässigbar elastisch verformbar. Beispielsweise ist das Material der Versteifungsstruktur Aluminium, Stahl oder ein Kunststoff. Dabei ist es nicht notwendig und auch nicht ausgeschlossen, dass der Kern und die Käfigstruktur aus demselben Material bestehen. Die Versteifungsstrukturen sind ebenfalls aus einem solchen gering oder vernachlässigbar elastisch verformbaren Material. Bevorzugt sind die Versteifungsstrukturen einstückig mit dem Kern oder der Käfigstruktur ausgebildet. In jedem Fall sind die Versteifungsstrukturen am Kern so angeordnet, dass sie sich innerhalb des Elastomerkörpers befinden. Die Versteifungsstrukturen an der Käfigstruktur können sich innerhalb des Elastomerkörpers befinden oder aber an dieser angebunden sein. In den Bereichen, in denen die Versteifungsstrukturen innerhalb des Elastomerkörpers angeordnet sind oder an den Elastomerkörper angebunden sind, ist die elastische Verformbarkeit des Elastomerkörpers verringert. Mit anderen Worten: Der Elastomerkörper ist in diesen Bereichen durch die Versteifungsstrukturen versteift. Man erkennt, dass in einer Ausführungsvariante denkbar ist, dass alle Versteifungsstrukturen vollständig vom Elastomerkörper umschlossen sind. Denkbar ist aber auch, dass nur die Versteifungsstruktur am Kern vollständig vom Elastomerkörper umschlossen ist.

Die Versteifung unterstützt die Pumpwirkung des Elastomerkörpers. Insbesondere die Pumpwirkung für die Dämpfung in axialer Richtung wird unterstützt. Die Versteifungsstrukturen können dabei am Kern, an der Käfigstruktur oder sowohl am Kern als auch an der Käfigstruktur ausgebildet sein. Besonders bevorzugt ist dabei, dass mindestens am Kern eine Versteifungsstruktur ausgebildet ist, ganz besonders bevorzugt sind sowohl am Kern als auch an der Käfigstruktur Versteifungsstrukturen ausgebildet. In jedem Fall erstrecken sich am Kern ausgebildete Versteifungsstrukturen in radialer Richtung von Außenseite des Kerns weg. An der Käfigstruktur ausgebildete Versteifungsstrukturen erstrecken sich bevorzugt in radialer Richtung auf die zentrale Achse hin.

Man erkennt, dass es weiterhin von besonderem Vorteil ist, dass sich die Versteifungsstrukturen in verschiedenen Richtungen unterschiedlich weit nach innen oder nach außen erstrecken. Dies führt dazu, dass die Trennmembranen im Bereich der Schenkel der zweiten Fluidkammerpaare durch die Versteifungen kolbenartig arbeitende Bereiche bei Axialauslenkungen ausbilden, während die Bereiche ohne Versteifungsstrukturen, beispielsweise im Bereich der ersten Fluidkammerpaare sich tendenziell schräg stellen. Würden sich alle axial fluchtenden Elastomermembranbereiche schräg stellen, so käme keine oder nur eine sehr geringe Pumpwirkung bei axialer Auslenkung zustande, was zu einer ungenügenden Axialdämpfung bzw. Axialtilgung führen würde. Ist hingegen mindestens ein Teil der axial fluchtenden Elastomerbereiche, insbesondere die Trennmembran mittels Versteifungsstruktur versteift, so dass dieser Bereich sich nicht schräg stellt, sondern kolbenartig wirkt, so kann durch Variation der Größe des Versteifungsbereiches die Pumpwirkung sehr genau auf die gewünschten Anforderungen eingestellt werden. Dadurch, dass insbesondere die Trennmembran im Bereich der ersten Fluidkammerpaare nicht mittels einer Versteifungsstruktur versteift ist, kommt es bei einer axialen Auslenkung zu keiner Volumenverdrängung bzgl. Fluidaustausch zwischen diesen ersten Fluidkammerpaaren. Dieses ist vorteilhaft, da zwischen den Fluidkammerpaaren möglichst nur ein Fluidaustausch bei radialen Belastungen, nicht aber bei axialen Belastungen stattfinden soll. So sind die Dämpfungseigenschaften des Lagers in radialer und axialer Richtung gut voneinander zu entkoppeln und separat einstellbar.

Mindestens die Versteifungsstrukturen des Kerns sind jeweils vollständig vom Elastomerkörper bedeckt, d. h. vollständig vom Elastomerkörper umschlossen. Eine Versteifungsstruktur, die am Kern ausgebildet ist, kann dabei einstückig mit dem Kern ausgebildet sein oder beispielsweise auf einen Kern aufgespritzt werden. Beispielsweise kann eine Versteifungsstruktur aus einem verstärkten Kunststoffcompound um einen metallischen Kern herum- oder aufgespritzt werde, Die Innenseite einer solchen aufgespritzten Versteifungsstruktur kann dabei vollständig an der Außenseite des Kerns anliegen, die Außenseite einer solchen Versteifungsstruktur ist vollständig vom Elastomerkörper bedeckt, was in diesem Zusammenhang vorliegend ebenfalls als vollständig von Elastomerkörper umschlossen angesehen wird. Denkbar ist aber auch, dass zwischen Versteifungsstruktur und Kern Durchgangslöcher vorhanden sind, oder dass die Versteifungsstruktur auf der kernzugewandten Seite Rippen aufweist.

Dies bietet den großen Vorteil, dass unabhängig von der Geometrie der Versteifungsstruktur der Elastomerkörper die außenumfangseitige Geometrie der Trennmembran definieren kann. In einer besonders günstigen Ausführungsvariante ist vorgesehen, dass die Versteifungsstruktur am Kern und die Versteifungsstruktur an der Käfigstruktur in radialer Richtung miteinander korrespondieren. "In radialer Richtung miteinander korrespondieren" meint dabei Folgendes: Die Versteifungsstruktur am Kern erstreckt sich wie oben beschrieben in einer radialen Richtung R2 weiter nach außen als in einer radialen Richtung R3. Gleichzeitig erstreckt sich die Versteifungsstruktur an der Käfigstruktur in der radialen Richtung R2 weiter nach innen als in der radialen Richtung R3.

Im bevorzugten Fall ergibt sich sogar eine axiale Überlappung, die zu einer besonders hohen Pumpleistung des hydraulischen Lagers führt. Durch die Einstellung der axialen Überlappung kann die Pumpleistung des hydraulischen Lagers und damit verbunden die hydraulische Dämpfungs- bzw. Tilgungswirkung des Lagers an die Aufgabe angepasst werden. Mit anderen Worten, es ist besonders günstig, wenn die Versteifungsstruktur am Kern und die Versteifungsstruktur an der Käfigstruktur in axialer Richtung gesehen ganz oder teilweise überlappend angeordnet sind. "In axialer Richtung gesehen" meint dabei, dass man die Lagerbuchse in der Richtung betrachtet, in der die axiale Richtung R1 verläuft. D. h. der Betrachter schaut genau in die Richtung, in der die axiale Richtung R1 sich erstreckt. Bei einer solchen Betrachtungsrichtung bedeutet eine axiale Überlappung, dass die Versteifungsstrukturen der Käfigstruktur und die Versteifungsstrukturen des Kerns kulissenartig vor- oder hintereinander angeordnet sind und sich in der Betrachtungsrichtung zumindest teilweise gegenseitig verdecken. Bei Betrachtung in axialer Richtung nehmen die Versteifungsstrukturen eine Fläche ein, die zur besseren Beschreibung im Folgenden als Projektionsflächen bezeichnet werden. Die einander wie oben beschrieben verdeckenden Flächen werden dabei dann als überlappende Projektionsflächen bezeichnet. Bei einer teilweisen Überlappung ist es besonders günstig, wenn die überlappenden Projektionsflächen jeweils mindestens 5 % der jeweiligen Projektionsfläche einnehmen, bevorzugt nimmt die überlappende Projektionsfläche mindestens 10 % der jeweiligen Projektionsfläche ein.

Der Elastomerkörper umschließt die beiden Ringe und mithin die Käfigstruktur und/oder er ist an den Käfigstrukturen angebunden. Insbesondere sind die Außenumfangsflächen der Ringe zumindest bereichsweise frei von Elastomer, wenn die Ringe und die Außenhülse aus Kunststoff sind und miteinander im Zusammenhang mit dem Aufbau bzw. der Montage des Lagers verschweißt werden. Man erkennt insofern, dass es günstig ist, wenn der Elastomerkörper die Käfigstruktur zumindest teilweise einschließt. Ferner erkennt man, dass die Lagerbuchse zwei Käfigstrukturen umfasst, wobei beiden Käfigstrukturen eine identische Geometrie aufweisen. Dadurch dass in einem Lager zwei Gleichteile verwendet werden können, kann ein besonders kostengünstiges Lager bereit gestellt werden.

### Zeichnung

Weitere Merkmale, Einzelheiten und Vorteile der Erfindung ergeben sich aus der folgenden Beschreibung von Ausführungsbeispielen anhand der Zeichnungen. Es zeigen:
- Fig. 1: eine schematische 3D-Ansicht der erfindungsgemäßen Lagerbuchse
- Fig. 2a: eine 3D-Ansicht der Käfigstruktur der Lagerbuchse
- Fig. 2b: eine 3D-Ansicht des Kerns der Lagerbuchse
- Fig. 2c: eine 3D-Ansicht von Käfigstruktur und Kern der Lagerbuchse
- Fig. 3a bis 3d: vier 3D-Ansichten der erfindungsgemäßen Lagerbuchse, wobei die Ansicht zwischen den Figuren 3a bis 3d von Figur zu Figur um die Achse A1 der Lagerbuchse rotiert

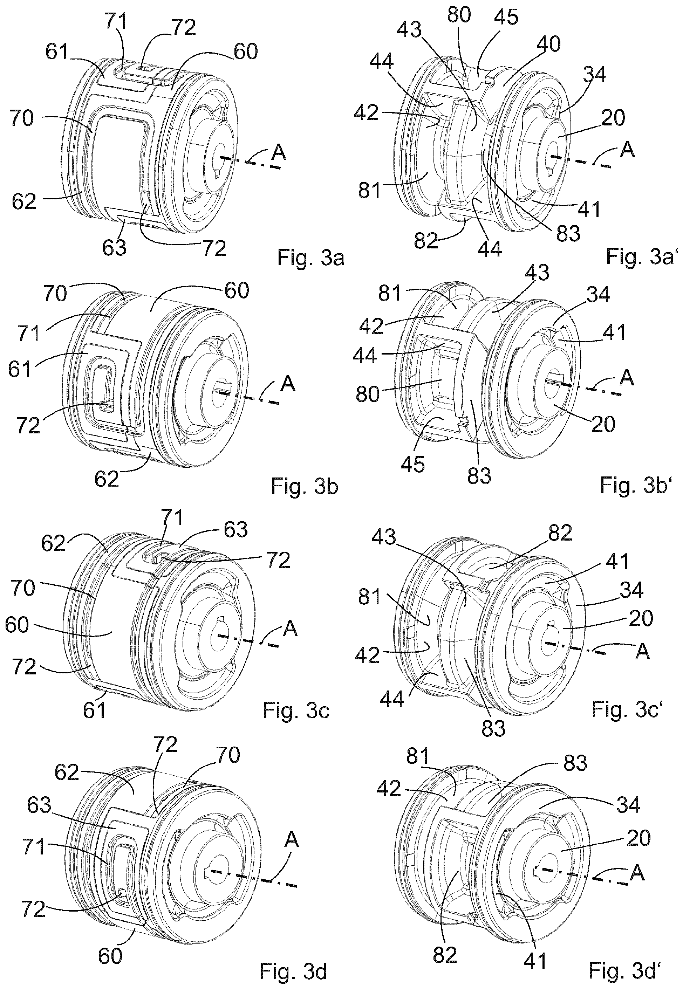

- Fig. 3a' bis 3d': Ansichten der Käfigstruktur und des Kerns, die jeweils zu den korrespondierenden Figuren 3a bis 3d der dort gezeigten Lagerbuchsen gehören

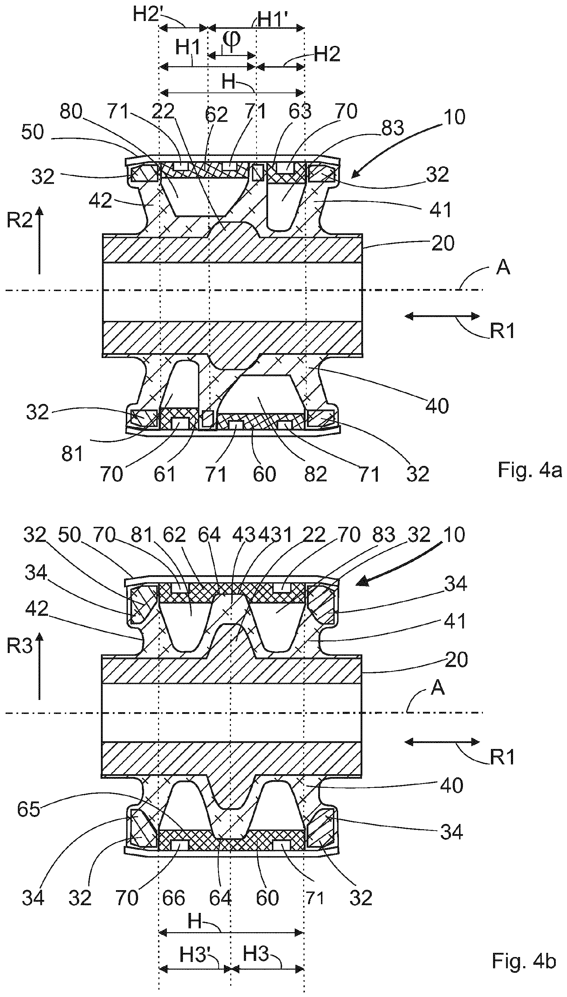

- Fig. 4a: ein schematischer Schnitt durch die Lagerbuchse, wobei die Zentrale Achse der Lagerbuchse innerhalb der Schnittebene verläuft
- Fig. 4b: einen weiteren schematischen Schnitt durch die Lagerbuchse, wobei die Zentrale Achse der Lagerbuchse innerhalb der Schnittebene verläuft

### Beschreibung von Ausführungsformen

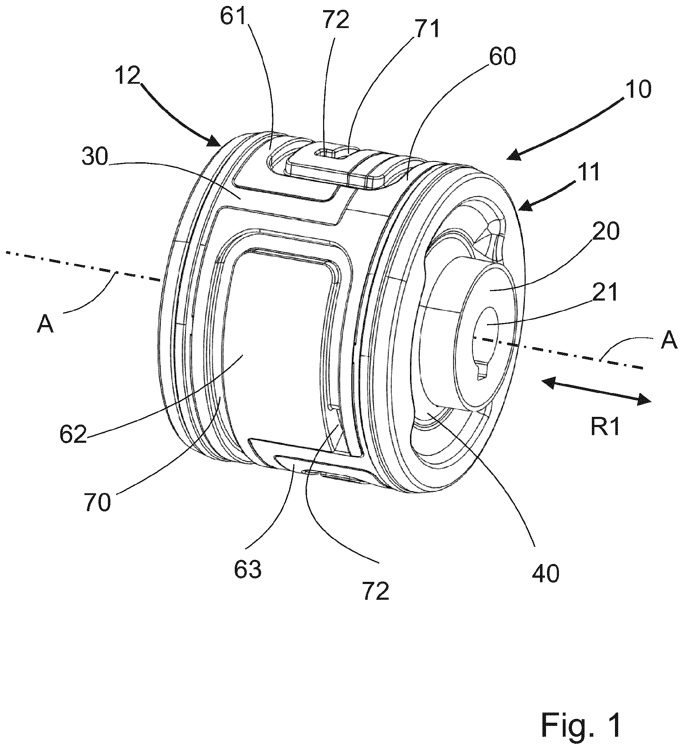

In Fig. 1 erkennt man eine Lagerbuchse 10. Die Lagerbuchse 10 hat einen Kern 20 und eine in der Fig. 1 nicht dargestellte Außenhülse 50. Die Lagerbuchse 10 ist grundsätzlich zylinderförmig mit einer Zentralachse A einer ersten Stirnseite 11 und einer zweiten Stirnseite 12, die durch eine Mantelfläche miteinander verbunden sind. Die Zentralachse A erstreckt sich in der axialen Richtung R1 und verläuft mittig durch den Kern 20, der ebenfalls eine im Wesentlichen zylindrische Form aufweist. Im Inneren des Kerns 20 ist eine Aufnahme 21 für ein Lager oder dergleichen ausgebildet. Die Zentralachse A bildet gleichzeitig die Zentralachse des Kerns 20 und verläuft durch die Mitte der Aufnahme 21.

Die Lagerbuchse 10 weist weiterhin einen Elastomerkörper 40 auf, sowie eine unter einer dünnen Gummihaut liegende Käfigstruktur 30. Die Käfigstruktur 30 ist weitestgehend innerhalb des Elastomerkörpers 40 angeordnet. Zwischen dem Elastomerkörper 40 bzw. der Käfigstruktur 30 und der Außenhülse sind Kanalhalbschalen 60, 61, 62, 63 angeordnet. Die Kanalhalbschalen 60, 61, 62, 63 haben jeweils eine Innenseite, die dem Elastomerkörper 40 zugewandt ist und eine Außenseite, die der Außenhülse zugewandt ist. Zwischen der Innenseite der Kanalhalbschalen 60, 61, 62, 63 und dem Elastomerkörper 40 sind die, in Fig. 1 nicht sichtbaren, weil im Inneren der Lagerbuchse liegenden, Fluidkammern 80, 81, 82, 83 ausgebildet.

An der Außenseite der Kanalhalbschalen 60, 61, 62, 63 sind Dämpfungskanäle 70, 71 ausgebildet. Diese sind mit Einlassöffnungen 72 verbunden, die durch die Kanalhalbschalen 60, 61, 62, 63 hindurchführen und die Fluidkammer 80, 81, 82, 83 mit den Dämpfungskanälen 70, 71 verbinden. Auf diese Weise verbindet jeweils ein Dämpfungskanal 70, 71, zwei Fluidkammern 80, 81, 82, 83 miteinander, wie im nachfolgenden noch genauer beschrieben wird.

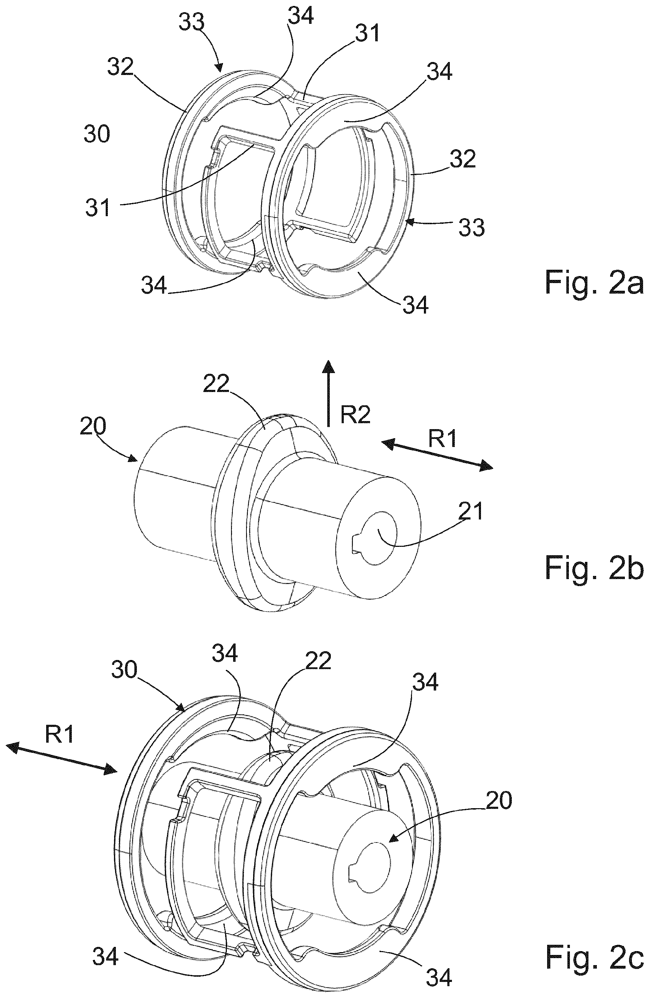

In den Figuren 2a, 2b und 2c sind die Käfigstruktur 30, der Kern 20 und Käfigstruktur 30 und Kern 20 gemeinsam dargestellt. Man erkennt insbesondere in Fig. 2a dass die Käfigstruktur 30 zwei Ringsegmente 32 aufweist, die jeweils im Bereich der Stirnseiten der Lagerbuchse 10 angeordnet sind. An jedem der Ringsegmente 32 ist ein Rahmensegment 31 angeordnet. Die Rahmensegmente 31 haben die Form rechteckiger Fenster. Jeweils ein Ringsegment 32 und ein Rahmensegment 31 bilden gemeinsam ein Käfigsegment 33.

Man erkennt weiter, dass der Kern 20 eine im Wesentlichen zylindrische Form aufweist. In der Mitte des Kerns 20 ist eine Versteifungsstruktur 22 ausgebildet. Die Versteifungsstruktur 22 erstreckt sich vom Kern 20 aus radial in Richtung R2, R2 nach außen. Man erkennt insbesondere in den Figuren 2b und 2c, dass sich die Versteifungsstruktur 22 in verschiedene radiale Richtungen R2, R3 unterschiedlich weit nach außen erstreckt.

In Fig. 2c erkennt man insbesondere, dass sich die Rahmensegmente 31 vom jeweils zugehörigen Ringsegment 32 aus betrachtet in axialer Richtung über die Mitte der Lagerbuchse 10 hinaus erstrecken.

Die Erfindung ist nicht auf eine der vorbeschriebenen Ausführungsformen beschränkt, sondern in vielfältiger Weise abwandelbar. Die Versteifungsstruktur 22 am Kern 20 hat Bereiche, die in Richtung der Rahmensegmente 31 weisen und Bereich die nicht in Richtung der Rahmensegmente 31 weisen. Die radiale Erstreckung der Versteifungsstruktur 22 ist in den Bereichen, die nicht in Richtung der Rahmensegmente 31 weisen größer als in den Bereichen, die in Richtung der Rahmensegmente 31 weisen. Man erkennt, dass auch an den Ringsegmenten 32 Versteifungsstrukturen 34 ausgebildet sind.

In den Figuren 3a' bis 3d' erkennt man, wie der Elastomerkörper 40 den Kern 20 und die Käfigstrukturen 30 umfasst und die Fluidkammern 80, 81, 82, 83 bildet. Der Elastomerkörper 40 weist jeweils stirnseitig eine äußere Membran 41, 42 auf. Jede der äußeren Membranen 41, 42 schließt sich dabei an eines der Ringsegmente 32 der Käfigstruktur 30 an. Der Elastomerkörper 40 weist weiterhin eine Trennmembran 43 auf. Die Trennmembran 43 ist im Bereich der Versteifungsstruktur 22 ausgebildet, wobei die Versteifungsstrukturen 22 vollständig in den Trennmembranen 43 aufgenommen sind. Darüber hinaus weist der Elastomerkörper 40 radiale Membranen 44, 45 auf, die mit den Rahmensegmenten 31 der Käfigstruktur 30 verbunden sind.

In den Figuren 3a bis 3d erkennt man dann jeweils, wie die Kanalhalbschalen 60, 61, 62, 63 die Fluidkammern 80, 81, 82, 83 nach außen hin verschließen, wobei die Fluidkammern 80, 81, 82, 83 jeweils in den korrespondierenden Figuren 3a' bis 3d' zu erkennen sind.

In allen Figuren 3a bis 3b und 3a' bis 3d' ist die Zentralachse A der Lagerbuchse 10 in die gleiche Richtung ausgerichtet, die Lagerbuchse 10 ist aber jeweils von Fig. 3a zu 3b, von Fig. 3b zu Fig. 3c und von Fig. 3c zu 3d um die Zentralachse A rotiert, so dass die Figuren 3a bis 3d jeweils verschiedene Ansichten der Kanalhalbschalen 60, 61, 62, 63 zeigen. In gleicherweise sind die Darstellungen der Lagerbuchse 10 von Fig. 3a' zu Fig. 3b', von Fig. 3b' zu Fig. 3c' und von Fig. 3c' zu Fig. 3d' rotiert. Dabei ist die Ausrichtung der Lagerbuchse 10 in den Figuren 3a und 3a' identisch, ebenso ist die Ausrichtung in Fig. 3b und 3b' identisch. Weiterhin ist die Ausrichtung in den Figuren 3c und 3c' identisch und die Ausrichtung in den Figuren 3d und 3d' ist identisch.

In den Figuren 3a, 3b, 3c, 3d ist erkennbar, dass an der Außenseite der Kanalhalbschalen 60, 61, 62, 63 Dämpfungskanäle 70, 71 ausgebildet sind. Der erste Dämpfungskanal 70 verbindet dabei die beiden Fluidkammern 81, 83, die eine Dämpfung in axialer Richtung R1 bewirken.

Der zweite Dämpfungskanal 71 verbindet die beiden Fluidkammern 82, 84, die die Dämpfung in radialer Richtung R2, R3 bewirken.

Man erkennt weiterhin, dass die Dämpfungskanäle 70, 71 jeweils einen Startpunkt und einen Endpunkt haben. An diesen Stellen sind die Kanalhalbschalen 60, 61, 62, 63 mit einer Einlassöffnung 72 nach innen versehen, so dass Flüssigkeit, die in der darunter liegenden Fluidkammer vorhanden ist, durch die Einlassöffnung 72 nach außen in den jeweiligen Dämpfungskanal 70, 71 übertreten kann.

In den Figuren 4a und 4b ist jeweils ein schematischer Schnitt durch die Lagerbuchse 10 gezeigt. Die Schnittebene wird dabei jeweils durch die Zentralachse A der Lagerbuchse 10 und eine sich radial von der Achse erstreckende Richtung R2, R3 aufgespannt. Die Zentralachse A liegt somit in der Schnittebene. Man erkennt den Kern 20 mit der Versteifungsstruktur 22, die sich jeweils unterschiedlich weit in radialer Richtung R2, R3 nach außen erstreckt. Der Kern 20 ist vom Elastomerkörper 40 umfasst. Der Elastomerkörper 40 weist zwei äußere Membranen 41, 42 und eine Trennmembran 43 auf. Die beiden äußerem Membranen 41, 42 umfassen mit ihren äußeren Enden die Ringsegmente 32 der Käfigstruktur 30. Die äußeren Membranen 41, 42 bilden die stirnseitigen Begrenzungen der Fluidkammern 80, 81, 82, 83.

In Fig. 4b ist die Trennmembran 43 zwischen den beiden Fluidkammern 81, 83, die die Dämpfung in axialer Richtung bewirken, ausgebildet. Das äußere Ende 431 der Trennmembran 43 greift dabei in eine Nut 64 ein, die an der Innenseite 65 der Kanalhalbschalen 60, 62 ausgebildet ist.

Der Kern 20 weist eine Versteifungsstruktur 22 auf. Die Versteifungsstruktur 22 erstreckt sich dabei in radialer Richtung R2, R3, d. h. in einer im Wesentlichen senkrecht zur axialen Richtung R1 verlaufenden Richtung, an der Außenseite des Kerns 20 in Richtung auf die Innenseite der Außenhülse 50 hin. Die Form der Kontur der Versteifungsstruktur 22 entspricht zumindest in dem Bereich, in dem die Fluidkammern 81, 83, die die axiale Dämpfung bewirken, unmittelbar aneinander angrenzen, weitgehend der Form der Kontur der Trennmembran 43, wie in Fig. 4b erkennbar ist. In diesem Bereich, in dem die Versteifungsstruktur 22 in die Trennmembran 43 hineinragt, wird die Steifigkeit der Trennmembran 43 durch die Versteifungsstruktur 22 erhöht.

Man erkennt weiterhin in den Figuren 4a und 4b, dass die Fluidkammern 80, 81, 82, 83 in axialer Richtung R1 eine gewisse Gesamthöhe H aufweisen. Die Gesamthöhe H setzt sich dabei immer aus den beiden Höhen zweier Fluidkammern 80, 81, 82, 83 zusammen. In den Bereichen, in denen die beiden Fluidkammern 81, 83, die die axiale Dämpfung bewirken, mit ihren Schenkeln aneinander angrenzen, sind diese beiden Höhen gleichmäßig auf beide Fluidkammern verteilt. Mit anderen Worten die Höhe H3 der ersten Fluidkammer 83 ist in diesem Bereich im Wesentlichen identisch mit der Höhe H3' der zweiten Fluidkammer 81.

In dem Bereich, in dem die Fluidkammern 80, 82 ausgebildet sind, die die radiale Dämpfung bewirken, setzt sich die Gesamthöhe H jeweils aus der Höhe H2 der ersten Fluidkammer 83, die die axiale Dämpfung bewirkt, und der Höhe H1 der ersten Fluidkammer 80, die die radiale Dämpfung bewirkt zusammen, bzw. aus der Höhe H2' der zweiten Fluidkammer 81, die die axiale Dämpfung bewirkt und der Höhe H1' der zweiten Fluidkammer 82, die die radiale Dämpfung bewirkt. Man erkennt, dass in diesem Fall die Höhe H1, H1' der Fluidkammern 80, 82, die die radiale Dämpfung bewirken, größer ist als die Höhe H2, H2' der Fluidkammern 81, 83, die die axiale Dämpfung bewirken. Im Einklang damit kann man auch in den Figuren 3a' bis 3d' erkennen, dass die Fluidkammern 81, 83, die die axiale Dämpfung bewirken, im Bereich ihrer Schenkel eine größere Höhe aufweisen als im Bereich der jeweiligen Basis. Weiterhin erkennt man, dass die Höhe H1, H1' der Fluidkammern 80, 82, die die radiale Dämpfung bewirken, größer ist als die Höhe H3, H3' im Bereich der Schenkel der Fluidkammern 81, 83, die die axiale Dämpfung bewirken. Insbesondere beträgt die Höhe H1, H1' der Fluidkammern 80, 82, die die radiale Dämpfung bewirken, wenigstens 2/3 und höchste 4/5 der Gesamthöhe H. Daraus ergibt sich auch, wie man auch in Figur 4a erkennt, dass sich die Fluidkammern 80, 82, die die radiale Dämpfung bewirken, bei Betrachtung in einer lateralen Projektion zumindest in einem gewissen Abschnitt P überlappen.

Sämtliche aus der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In jedem Fall ist es bei einer Lagerbuchse 10 zur hydraulischen Dämpfung in axialer Richtung R1 und radialer Richtung R2, R3, wobei die Lagerbuchse 10 einen Kern 20, einen Elastomerkörper 40, eine Außenhülse 50, eine Käfigstruktur 30, sowie vier Kanalhalbschalen 60, 61, 62, 64, ein erstes Fluidkammerpaar mit zwei Fluidkammern 80, 82 für die Dämpfung in radialer Richtung R2, R3 und ein zweites Fluidkammerpaar mit zwei Fluidkammern 81, 83 für die Dämpfung in axialer Richtung R1 aufweist, günstig, wenn die Kanalhalbschalen 60, 61, 62, 64 im montierten Zustand insgesamt wenigstens zwei Dämpfungskanäle 70, 71 bilden, die die Fluidkammern 80, 81, 82, 83 jeweils paarweise derart miteinander verbinden, dass die Fluidkammern 80, 82 des ersten Fluidkammerpaares durch den ersten Dämpfungskanal 70 miteinander verbunden sind und dass die Fluidkammern 81, 83 des zweiten Fluidkammerpaares durch den zweiten Dämpfungskanal 71 miteinander verbunden sind.

Besonders günstig ist es dabei, dass die Fluidkammern 81, 83 des zweiten Fluidkammerpaares einen Teilkreis von mindestens 180°, bevorzugt von mindestens 250°, besonders bevorzugt von mindestens 270° aber weniger als 360° um die Zentralachse A beschreiben. Weiterhin günstig ist es, dass die Fluidkammern 80, 82 des ersten Fluidkammerpaares einen Teilkreis von höchstens 90° und größer als 10°, bevorzugt höchstens 45° und größer 20°, besonders bevorzugt von 30° um die Zentralachse A beschreiben. Dabei weist die Lagerbuchse 10 in axialer Richtung eine Gesamthöhe H auf, die sich jeweils aus der Höhe zweier Fluidkammern 80, 81, 82, 83 zusammensetzt, wobei die Höhe der Fluidkammern 80, 82 des ersten Fluidkammerpaares jeweils mindestens 2/3 und höchsten 4/5 der Gesamthöhe H beträgt. Dabei ist es günstig, wenn die Fluidkammern 81, 83 des zweiten Fluidkammerpaares in axialer Richtung eine erste Höhe H2, H2' und eine zweite Höhe H3, H3' aufweisen, wobei die erste Höhe H2, H2' in einem Bereich der Lagerbuchse 10 vorliegt, in dem die Gesamthöhe H durch eine Fluidkammer des ersten Fluidkammerpaares und eine Fluidkammer des zweiten Fluidkammerpaares gebildet wird und wobei die zweite Höhe H3, H3' in einem Bereich der Lagerbuchse vorliegt, in dem die Gesamthöhe (H) durch zwei Fluidkammern des zweiten Fluidkammerpaares gebildet wird.

Bei einer solchen Lagerbuchse 10 ist es weiterhin günstig, wenn die Käfigstruktur 30 zwei Käfigsegmente 33 aufweist, wobei jedes Käfigsegment 33 ein Ringsegment 32 und ein rechteckiges Rahmensegment 31 aufweist. Weiterhin ist es von Vorteil, wenn der Kern 20 eine Versteifungsstruktur 22 aufweist. Denkbar ist auch, dass die Käfigstruktur 30 Versteifungsstrukturen 34 aufweist und/oder, dass der Elastomerkörper 40 die Käfigstrukturen 30 zumindest teilweise einschließt, wobei eine besonders kostengünstige Lagerbuchse 10 geschaffen wird, wenn beide Käfigstrukturen Gleichteile sind.

### Bezugszeichenliste

- A: Zentralachse

- H: Gesamthöhe
- H1: Höhe
- H1': Höhe
- H2: Höhe
- H2': Höhe
- H3: Höhe
- H3': Höhe

- R1: axiale Richtung
- R2: radiale Richtung
- R3: radiale Richtung

- P: überlappender Bereich

- 10: Lagerbuchse
- 11: Stirnseite
- 12: Stirnseite

- 20: Kern
- 21: Aufnahme
- 22: Versteifungsstruktur

- 30: Käfigstruktur
- 31: Rahmensegment
- 32: Ringsegment
- 33: Käfigsegment
- 34: Versteifungsstruktur

- 40: Elastomerkörper
- 41: äußere Membran
- 42: äußere Membran
- 43: Trennmembran
- 431: äußeres Ende
- 44: radiale Membran
- 45: radiale Membran

- 50: Außenhülse

- 60: Kanalhalbschale
- 61: Kanalhalbschale
- 62: Kanalhalbschale
- 63: Kanalhalbschale

- 70: Dämpfungskanal
- 71: Dämpfungskanal
- 72: Einlassöffnung

- 80: Fluidkammer
- 81: Fluidkammer
- 82: Fluidkammer
- 83: Fluidkammer

## Patentansprüche

1. Lagerbuchse (10) zur hydraulischen Dämpfung in axialer Richtung (R1) und radialer Richtung (R2, R3), wobei die Lagerbuchse (10) einen Kern (20), einen Elastomerkörper (40), eine Außenhülse (50), eine Käfigstruktur (30), sowie vier Kanalhalbschalen (60, 61, 62, 64), ein erstes Fluidkammerpaar mit zwei Fluidkammern (80, 82) für die Dämpfung in radialer Richtung (R2, R3) und ein zweites Fluidkammerpaar mit zwei Fluidkammern (81, 83) für die Dämpfung in axialer Richtung (R1) aufweist, **dadurch gekennzeichnet, dass** die Kanalhalbschalen (60, 61, 62, 63) im montierten Zustand insgesamt wenigstens zwei Dämpfungskanäle (70, 71) bilden, die die Fluidkammern (80, 81, 82, 83) jeweils paarweise derart miteinander verbinden, dass die Fluidkammern (80, 82) des ersten Fluidkammerpaares durch den ersten Dämpfungskanal (70) miteinander verbunden sind und dass die Fluidkammern (81, 83) des zweiten Fluidkammerpaares durch den zweiten Dämpfungskanal (71) miteinander verbunden sind.

2. Lagerbuchse (10) nach Anspruch 1, **dadurch gekennzeichnet, dass** die Fluidkammern (81, 83) des zweiten Fluidkammerpaares einen Teilkreis von mindestens 180°, bevorzugt von mindestens 250°, besonders bevorzugt von mindestens 270° aber weniger als 360° um die Zentralachse A beschreiben.

3. Lagerbuchse (10) nach einem der vorhergehenden Ansprüche, **dadurch gekennzeichnet, dass** die Fluidkammern (80, 82) des ersten Fluidkammerpaares einen Teilkreis von höchstens 90° und größer als 10°, bevorzugt höchstens 40° und größer 20°, besonders bevorzugt von 30° um die Zentralachse A beschreiben.

4. Lagerbuchse (10) nach einem der vorhergehenden Ansprüche, **dadurch gekennzeichnet, dass** die Lagerbuchse (10) in axialer Richtung eine Gesamthöhe (H) aufweist, die sich jeweils aus der Höhe zweier Fluidkammern (80, 81, 82, 83) zusammensetzt.

5. Lagerbuchse (10) nach einem der vorhergehenden Ansprüche, **dadurch gekennzeichnet, dass** die Lagerbuchse (10) in axialer Richtung eine Gesamthöhe (H) aufweist, wobei die Höhe der Fluidkammern (80, 82) des ersten Fluidkammerpaares jeweils mindestens 2/3 und höchsten 4/5 der Gesamthöhe (H) beträgt.

6. Lagerbuchse (10) nach einem der vorhergehenden Ansprüche, **dadurch gekennzeichnet, dass** die Fluidkammern (81, 83) des zweiten Fluidkammerpaares in axialer Richtung eine erste Höhe (H2, H2') und eine zweite Höhe (H3, H3') aufweisen, wobei die erste Höhe (H2, H2') in einem Bereich der Lagerbuchse (10) vorliegt, in dem die Gesamthöhe (H) durch eine Fluidkammer des ersten Fluidkammerpaares und eine Fluidkammer des zweiten Fluidkammerpaares gebildet wird und wobei die zweite Höhe (H3, H3') in einem Bereich der Lagerbuchse vorliegt, in dem die Gesamthöhe (H) durch zwei Fluidkammern des zweiten Fluidkammerpaares gebildet wird.

7. Lagerbuchse (10) nach einem der vorhergehenden Ansprüche, **dadurch gekennzeichnet, dass** die Käfigstruktur (30) zwei Käfigsegmente (33) aufweist, wobei jedes Käfigsegment (33) ein Ringsegment (32) und ein rechteckiges Rahmensegment (31) aufweist.

8. Lagerbuchse (10) nach einem der vorhergehenden Ansprüche, **dadurch gekennzeichnet, dass** der Kern (20) eine Versteifungsstruktur (22) aufweist.

9. Lagerbuchse (10) nach einem der vorhergehenden Ansprüche, **dadurch gekennzeichnet, dass** die Käfigstruktur (30) Versteifungsstrukturen (34) aufweist.

10. Lagerbuchse (10) nach einem der vorhergehenden Ansprüche, **dadurch gekennzeichnet, dass** der Elastomerkörper (40) die Käfigstruktur (30) zumindest teilweise einschließt.

11. Lagerbuchse (10) nach einem der vorhergehenden Ansprüche, **dadurch gekennzeichnet, dass** die Lagerbuchse zwei Käfigstrukturen (30) umfasst, wobei beiden Käfigstrukturen (39) eine identische Geometrie aufweisen.
